# EUROPÄISCHE PATENTSCHRIFT

(11) **EP 1 312 533 B1**
(45) Veröffentlichungstag und Bekanntmachung des Hinweises auf die Patenterteilung: **09.01.2008**
(21) Anmeldenummer: 02025115.3
(22) Anmeldetag: 08.11.2002
(51) Int. Cl.: B62D 5/30, B62D 5/07, B62D 5/06, B60T 13/14

(54) **Mobile Arbeitsmaschine mit einer elektrisch angetriebenen Lenkpumpe**
Mobile working machine with electrical driven steering pump
Machine de travail mobile avec pompe de direction à entraînement électrique

(30) Priorität: 17.11.2001 DE 10156598
(43) Veröffentlichungstag der Anmeldung: 21.05.2003
(73) Patentinhaber: STILL GMBH, 22113 Hamburg (DE)
(72) Erfinder: Fromme, Georg, Dr., 22145 Hamburg (DE); Neuf, Ottmar, 21465 Reinbek (DE); Bavendiek, Rainer, Dr., 21465 Wentorf (DE); Macit, Recep, 40625 Düsseldorf (DE); Heitmann, Claus, 21680 Stade (DE); Hübner, Jörg, 21037 Hamburg (DE)
(74) Vertreter: Geirhos, Johann

(56) Entgegenhaltungen:
- EP-A- 1 399 349
- DE-C- 4 330 159
- DE-C1- 19 733 032
- US-A- 3 802 746
- US-A- 5 549 361
- PATENT ABSTRACTS OF JAPAN Bd. 1999, Nr. 02, 26. Februar 1999 (1999-02-26) & JP 10 310046 A (TOYOTA MOTOR CORP), 24. November 1998 (1998-11-24)

## Beschreibung

Die Erfindung betrifft eine mobile Arbeitsmaschine, insbesondere Flurförderzeug, mit einer von einem Elektromotor angetriebenen hydraulischen Lenkpumpe, an die ein Lenkaktuator mit vorgeschalteter Steuereinrichtung angeschlossen ist.

Eine gattungsgemäße mobile Arbeitsmaschine ist in der DE 197 52 022 A1 beschrieben. Die Lenkpumpe dieser Arbeitsmaschine sorgt dabei nicht nur für die Bereitstellung der im Fahrbetrieb nötigen Energie für die Lenkanlage, sondern erzeugt auch den zum Lösen der Federspeicherbremse erforderlichen Druck und speist darüber hinaus eine Arbeitshydraulik. Es handelt sich also um einen elektrischen Ein-Pumpen-Antrieb.

Bei der gattungsgemäßen Arbeitsmaschine ist auch bei Ausfall der Lenkpumpe oder des elektrischen Antriebs der Lenkpumpe die Lenkfähigkeit gewährleistet, da die Steuereinrichtung über eine mit dem Lenkrad gekoppelte Lenkdosierpumpe verfügt. Mit Hilfe dieser Lenkdosierpumpe kann - mit erhöhtem Kraftaufwand - der Lenkaktuator, beispielsweise ein Lenkzylinder, auch bei Ausfall der Lenkpumpe betätigt werden (Notlenkung).

Der vorliegenden Erfindung liegt die Aufgabe zu Grunde, eine mobile Arbeitsmaschine der eingangs genannten Art zur Verfügung zu stellen, die bei Sicherstellung einer Notenergieversorgung einen vereinfachten Aufbau der Lenkanlage ermöglicht.

Diese Aufgabe wird erfindungsgemäß dadurch gelöst, dass die Steuereinrichtung keine Dosierpumpe aufweist und ein Hydrospeicher zur Notversorgung der Lenkung an eine die Lenkpumpe mit dem Lenkaktuator verbindende Förderleitung angeschlossen ist.

Damit kann eine Lenkung zum Einsatz kommen, die auf den Einsatz einer Lenkdosierpumpe verzichtet, sondern zur Steuerung beispielsweise ein elektromagnetisch betätigbares Proportionalventil verwendet und deshalb einfacher und kostengünstiger aufgebaut ist. Dennoch ist die Lenkfähigkeit bei Ausfall der Lenkpumpe gewährleistet, da in diesem Fall der Hydrospeicher wirksam wird.

Gemäß einer vorteilhaften Weiterbildung der Erfindung ist an die Lenkpumpe und den Hydrospeicher eine hydraulisch lösbare Federspeicherbremse angeschlossen. Federspeicherbremse und Lenkung nutzen also einen gemeinsamen Hydrospeicher als Energiereservoir.

Damit ist einerseits eine Notversorgung der Lenkung gewährleistet, andererseits sind längere Betriebspausen des Elektromotors und der Lenkpumpe möglich, ohne dass die Federspeicherbremse - durch Leckverluste bedingt - nach kurzer Zeit bereits wieder schließt. Die Leckverluste der Federspeicherbremse werden somit so lange durch den Hydrospeicher ausgeglichen, bis der Systemdruck einen Grenzwert unterschreitet und der Elektromotor der Lenkpumpe zum Laden des Speichers wieder eingeschaltet wird. Gegenüber einer Ausführung mit zwei separaten Hydrospeichern - jeweils einer für die Lenkanlage bzw. die Federspeicherbremse - ist dabei der Verrohrungsaufwand herabgesetzt.

Es erweist sich ferner als zweckmäßig, wenn der Hydrospeicher und die Federspeicherbremse stromab eines in Richtung zur Steuereinrichtung öffnenden Rückschlagventils an die Förderleitung der Lenkpumpe angeschlossen sind, wobei der Federspeicherbremse ein Bremssteuerventil und ein in Richtung zum Bremssteuerventil öffnendes Rückschlagventil vorgeschaltet sind und wobei die Federspeicherbremse in einer ersten Schaltstellung des Bremssteuerventils, in der ein Abfließen von Druckmittel aus der Förderleitung verhindert ist, mit einem Tank und in einer zweiten Schaltstellung mit dem Hydrospeicher und der Lenkpumpe verbunden ist.

Dadurch ist es möglich, bei Ausfall der Lenkpumpe durch Betätigen des Bremssteuerventiles die Federspeicherbremse zu schließen und das Druckmittel aus dem Hydrospeicher ausschließlich für die Versorgung des Lenkaktuators zur Verfügung zu stellen. Eine erfindungsgemäß ausgestaltete Arbeitsmaschine kann also selbsttätig abbremsen und dabei gleichzeitig mit Hilfe der Notenergieversorgung aus dem Druckspeicher gelenkt werden.

Weitere Vorteile und Einzelheiten der Erfindung werden anhand des in der schematischen Figur dargestellten Ausführungsbeispieles näher erläutert.

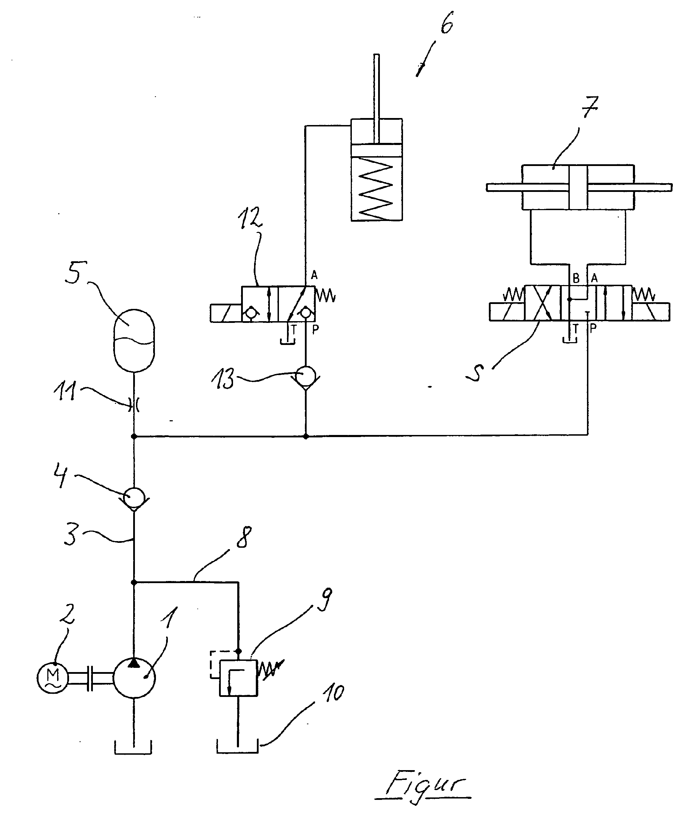

Die Figur zeigt eine hydraulischen Schaltplan zur Lenkanlage und Federspeicherbremse einer erfindungsgemäßen mobilen Arbeitsmaschine, beispielsweise eines Gabelstaplers. An eine Lenkpumpe 1, die von einem Elektromotor 2 angetrieben wird, ist eine Förderleitung 3 angeschlossen, die stromab eines Rückschlagventils 4 mit einem Hydrospeicher 5, einer Federspeicherbremse 6 und einem Lenkaktuator 7 verbunden ist. Dem Lenkaktuator 7 ist eine Steuereinrichtung S vorgeschaltet, die im Gegensatz zu den üblicherweise in mobilen Arbeitsmaschinen zum Einsatz kommenden hydrostatischen Lenkanlagen nicht über ein Lenkdosierpumpe verfügt, sondern als elektromagnetisch betätigbares Proportionalventil ausgebildet ist.

Stromauf des Rückschlagventils 4 zweigt von der Förderleitung 3 eine Leitung 8 ab, in der ein Druckbegrenzungsventil 9 angeordnet ist, das an einen Tank 10 angeschlossen ist. Der Hydrospeicher 5 kann als Blasenspeicher, hydraulischer Federspeicher o.ä. ausgeführt sein.

Das Rückschlagventil 4 öffnet in Fließrichtung zu den genannten Komponenten. Dem Hydrospeicher 4 ist eine Drossel 11 vorgeschaltet. Ein der Federspeicherbremse 6 vorgeschaltetes Bremssteuerventil 12 ist im vorliegenden Ausführungsbeispiel elektromagnetisch gegen Federkraft betätigbar. Stromauf des Bremssteuerventils 12 ist ein Rückschlagventil 13 angeordnet, das in Richtung zum Bremssteuerventil 12 öffnet.

Das Bremssteuerventil 12 weist eine erste Schaltstellung auf, in der die Federspeicherbremse 6 mit dem Tank 10 verbunden und somit geschlossen ist (Grundstellung). Gleichzeitig ist die verbindung zur Förderleitung 3 blockiert. In einer zweiten Schaltstellung ist die Federspeicherbremse 6 an die Förderleitung 3 und damit an die Lenkpumpe 1 angeschlossen. Bei ausreichendem Druck in der Förderleitung 3 im Bereich stromab des Rückschlagventils 4 ist dabei die Federspeicherbremse 6 geöffnet.

Fällt die Lenkpumpe 1 aus, so wird dies durch eine geeignete Sensorik erfasst und das Bremssteuerventil 12 automatisch in seine erste Schaltstellung bewegt. Die Federspeicherbremse 6 wird somit geschlossen. Das im Hydrospeicher 5 befindliche Druckmittel steht damit in vollem Umfang dem Lenkaktuator 7 zur Verfügung, so dass die mobile Arbeitsmaschine trotz fehlender Lenkdosierpumpe lenkbar bleibt.

## Patentansprüche

1. Mobile Arbeitsmaschine, insbesondere Flurförderzeug, mit einer von einem Elektromotor angetriebenen hydraulischen Lenkpumpe, an die ein Lenkaktuator mit vorgeschalteter Steuereinrichtung angeschlossen ist, **dadurch gekennzeichnet, dass** die Steuereinrichtung (S) keine Dosierpumpe aufweist und ein Hydrospeicher (5) zur Notversorgung der Lenkung an eine die Lenkpumpe (1) mit dem Lenkaktuator (7) verbindende Förderleitung (3) angeschlossen ist.

2. Mobile Arbeitsmaschine nach Anspruch 1, **dadurch gekennzeichnet, dass** an die Lenkpumpe (1) und den Hydrospeicher (5) eine hydraulisch lösbare Federspeicherbremse (6) angeschlossen ist.

3. Mobile Arbeitsmaschine nach Anspruch 2, **dadurch gekennzeichnet, dass** der Hydrospeicher (5) und die Federspeicherbremse (6) stromab eines in Richtung zur Steuereinrichtung (S) öffnenden Rückschlagventils (4) an die Förderleitung (3) der Lenkpumpe (1) angeschlossen sind, wobei der Federspeicherbremse (6) ein Bremssteuerventil (12) und ein in Richtung zum Bremssteuerventil (12) öffnendes Rückschlagventil (13) vorgeschaltet sind und wobei die Federspeicherbremse (6) in einer ersten Schaltstellung des Bremssteuerventils (12), in der ein Abfließen von Druckmittel aus der Förderleitung (3) verhindert ist, mit einem Tank (10) und in einer zweiten Schaltstellung mit dem Hydrospeicher (5) und der Lenkpumpe (1) verbunden ist.

## Claims

1. Mobile working machine, in particular industrial truck, comprising a hydraulic steering pump, which is driven by an electric motor, to which pump a steering actuator with an upstream control device is connected, **characterised in that** the control device (S) has no metering pump and a hydraulic accumulator (5) for the emergency supply of the steering is connected to a conveyor line (3) connecting the steering pump (1) to the steering actuator (7).

2. Mobile working machine according to claim 1, **characterised in that** a hydraulically releasable spring-loaded brake (6) is connected to the steering pump (1) and the hydraulic accumulator (5).

3. Mobile working machine according to claim 2, **characterised in that** the hydraulic accumulator (5) and the spring-loaded brake (6) are connected downstream from a check valve (4), which opens in the direction of the control device (S), to the conveyor line (3) of the steering pump (1), a brake control valve (12) and a check valve (13) opening in the direction of the brake control valve (12) being connected upstream from the spring-loaded brake (6) and the spring-loaded brake (6) being connected in a first switching position of the brake control valve (12), in which pressure medium is prevented from flowing out of the conveyor line (3), to a tank (10) and, in a second switching position, being connected to the hydraulic accumulator (5) and the steering pump (1).

## Revendications

1. Engin notamment chariot transporteur comportant une pompe hydraulique de direction, entraînée par un moteur électrique à laquelle est relié un actionneur de direction avec une installation de commande en amont,
**caractérisé en ce que**
l'installation de commande (S) ne comporte pas de pompe de dosage et un réservoir hydraulique (5) est relié à une conduite de refoulement (3) reliant la pompe de direction (1) à l'actionneur de direction (7) pour assurer une alimentation de secours.

2. Engin selon la revendication 1,
**caractérisé en ce que**
la pompe de direction (1) et le réservoir hydraulique (5) sont reliés à un frein à ressort accumulateur (6) qui se desserre hydrauliquement.

3. Engin selon la revendication 2,
**caractérisé en ce que**
le réservoir hydraulique (5) et le frein à ressort accumulateur (6) sont reliés en aval d'un clapet anti-retour (4) souvent en direction de l'installation de commande (S), à la conduite de refoulement (3) de la pompe de direction (1),
le frein à ressort accumulateur (6) étant précédé d'une vanne de commande de frein (12) et d'un clapet anti-retour (13) s'ouvrant en direction de la vanne de commande de frein (12), et
dans une première position de commutation de la vanne de commande de frein (12) dans laquelle le liquide hydraulique ne peut s'échapper de la conduite de refoulement (3), le frein à ressort accumulateur (6) est relié à un réservoir (10) et dans une seconde position de commutation, il est relié au réservoir hydraulique (5) et à la pompe de direction (1).
